# EUROPEAN PATENT SPECIFICATION

(11) **EP 2 179 641 B1**
(45) Date of publication and mention of the grant of the patent: **29.06.2011**
(21) Application number: 09075461.5
(22) Date of filing: 12.10.2009
(51) Int. Cl.: A01D 75/20, A01D 78/10

(54) **Agricultural machine**
Landwirtschaftliche Maschine
Machine agricole

(30) Priority: 27.10.2008 NL 1036115
(43) Date of publication of application: 28.04.2010
(73) Proprietor: Lely Patent N.V., 3147 PA Maassluis (NL)
(72) Inventor: Van Den Engel, Alfonsus Jacobus, 3123 CM Schiedam (NL)
(74) Representative: Corten, Maurice Jean F.M.

(56) References cited:
- EP-A- 0 310 532
- DE-U1- 8 712 165
- FR-A- 2 891 437

## Description

The invention relates to an agricultural machine, in particular to a haymaking machine comprising a frame which is configured to be attached to a vehicle in order to move the agricultural machine in a customary direction of travel, at least one bearing arm which is connected to the frame so as to be pivotable about one or more pivot axes, and a plurality of processing members with processing elements for working the land or processing a crop, wherein the processing members are movably, in particular rotatably, connected to the bearing arm, wherein the processing members are at least displaceable between an operating position and a transport position by pivoting the bearing arm. A machine of this kind is known from the document FR 2 891 437.

In the operating position, the processing elements are positioned in such a manner that they can work the land or process the crop over which the agricultural machine moves, for example rake or ted grass. In the transport position of the processing members, the processing members are folded upwards so that they are in a position which is convenient for transportation.

However, in the transport position, the processing elements, for example teeth, can project towards one side of the agricultural machine and thus cause a risk of injury for people or animals and/or of damage to objects. Such a risk of injury and/or damage is undesirable.

It is an object of the invention to provide an agricultural machine in which the risk of injury and/or damage by those parts of the processing members, in particular the processing elements, of the agricultural machine which protrude in the transport position is removed or at least reduced.

This object is achieved by providing an agricultural machine comprising:
- a frame which is configured to be attached to a vehicle in order to move the agricultural machine in a customary direction of travel,
- at least one bearing arm which is connected to the frame so as to be pivotable about one or more pivot axes, and
- a plurality of processing members with processing elements for working the land or processing a crop, wherein the processing members are movably, in particular rotatably, connected to the bearing arm, wherein the processing members are at least displaceable between an operating position and a transport position by pivoting the bearing arm, characterized in that the agricultural machine comprises a barrier device for demarcating the processing members in the transport position, wherein the barrier device comprises:
- a band,
- a winding device for winding and unwinding the band, and
- a fastening element which is provided at a distance from the winding device for detachably fastening an end of the band thereto,
   wherein the winding device and the fastening element are arranged on one side of the agricultural machine and at a height in the range from 1 to 2 metres, in such a manner that the band, when it is connected to the fastening element with its end, runs at the same height as the processing members in the transport position.

By providing a barrier device in the form of a band which can be tightened between the winding device and the fastening member, a satisfactory barrier for the processing members can be obtained in a simple manner, it also being possible to remove the barrier in a simple manner if the processing members have to be folded out into the operating position.

In the transport position, the band can be tightened between the winding device and the fastening element in a simple manner by unwinding the band from the winding device and fastening the end of the band which is intended for this purpose to the fastening member.

If it is desired to fold out the processing members into the operating position, but the presence of the barrier prevents this folding out as such, the barrier can be removed by detaching the end of the band from the fastening element and winding the band onto the winding device.

The advantage of a winding device is that the band and thus the entire barrier device cannot be removed from the agricultural machine without tools, while the band does not pose any inconvenience or danger when it is not tightened but wound up, since it is stored on the winding device. If the band were not wound up, it could end up, for example, between moving parts of the agricultural machine.

If the band is arranged between the winding device and the fastening element, it runs at a height in the range from 1 to 2 metres, with the height being determined in relation to a flat, horizontal surface on which the agricultural machine is situated. Furthermore, the band runs at the same height as the processing members. That is to say that the band is situated at a height in a range between the lowest and the highest point of the relevant processing member in the transport position.

The band may be any elongate flexible element which is suitable for winding onto the winding device, for example a strip, cord, belt, chain or rope. Furthermore, the band can be made of any suitable material, for example natural or synthetic fibres or metal. The band preferably has a conspicuous colour, for example yellow/black or red/white stripes.

In one embodiment, the winding device comprises a tightening device for tightening the band. By means of such a tightening device, the tension on the band can be maintained. In addition, the tightening device can be used for winding the band onto the winding device.

In one embodiment, the frame comprises a first arm on which the winding device is attached and a second arm on which the fastening element is attached. The first and/or second arms which are/is preferably arranged on one side of the agricultural machine, may be designed to fold up. This is particularly advantageous if the respective arms form an obstacle when folding out the processing members into the operating position.

In this case, the first and/or the second arm can serve as marking devices which mark the outer boundary of one side of the agricultural machine. In this case, the first and second arm may be positioned at neighbouring corners of the agricultural machine. By tightening the band between two arms, an entire side of the agricultural machine is clearly marked, with the processing members being situated behind the band. This further increases safety.

The invention will be described in more detail below with reference to the accompanying drawing, in which:
Figure 1 shows a top view of a haymaking machine according to the invention, and
Figure 2 shows a side view of the haymaking machine from Figure 1.

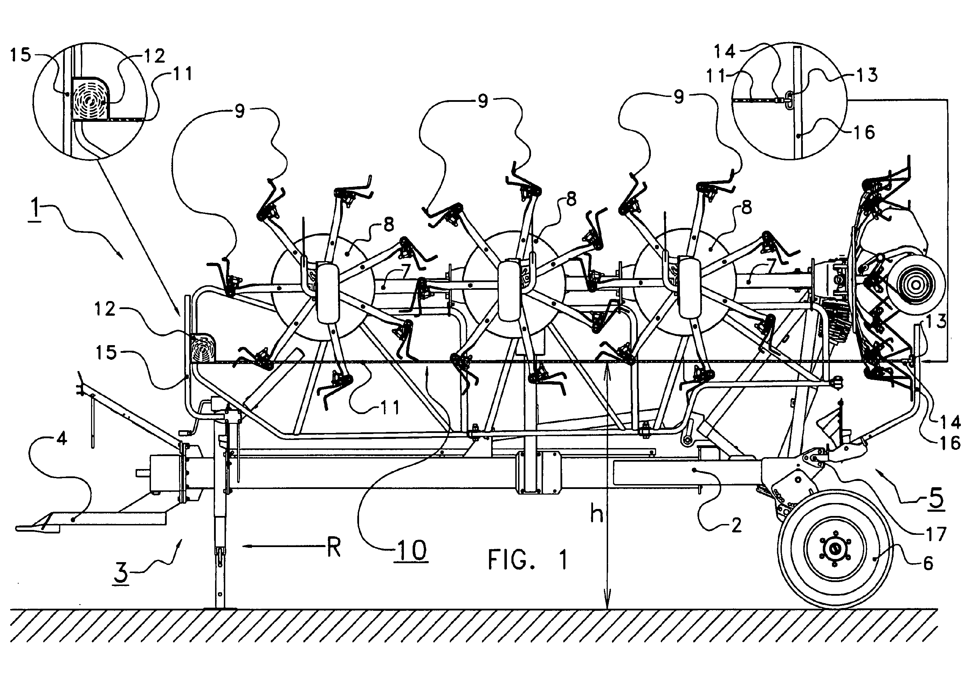

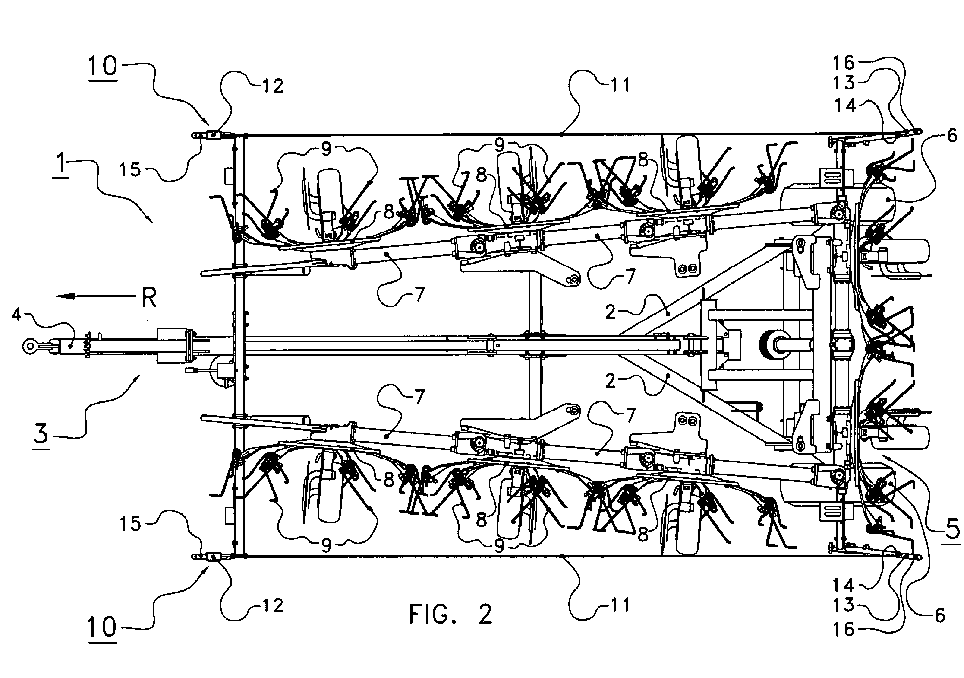

Figures 1 and 2 show a side view and top view, respectively, of a haymaking machine according to the invention which is denoted overall by reference numeral 1. The haymaking machine 1 which is configured to ted a crop has an elongate frame 2. At a front end 3 of the frame 2, a device 4 is provided for coupling the haymaking machine 1 to a pulling vehicle, such as a tractor (not shown). At the rear end 5 of the frame 2, a main wheel frame 6 is provided for supporting the haymaking machine 1. When the haymaking machine 1 is coupled to a tractor or the like, it will be moved in a customary direction of travel during operation, which direction of travel substantially coincides with the longitudinal direction of the frame 2.

Two bearing arms 7 are connected on the frame 2, each of which supports a number of crop-processing members 8. The two bearing arms 7 with crop-processing members 8 are arranged substantially symmetrically with respect to the frame 2. The crop-processing members 8 are arranged rotatably about shafts which are attached to the respective bearing arm 7. The crop-processing members 8 comprise a number of crop-processing elements 9, such as teeth or the like, which are arranged around the circumference.

Each bearing arm 7 is pivotably arranged in such a manner that the crop-processing members 8 are movable between an operating position (not shown) in which the crop-processing members 8 are positioned near the ground, in such a manner that the processing elements 9 can process crop situated on the ground, and a transport position, as is illustrated in Figures 1 and 2.

In the transport position, it is important that the entire haymaking machine 1 remains substantially within the maximum dimensions which are often imposed by the relevant authorities and government bodies with regard to such machines during transportation. In certain countries, for example, the machine is only allowed to have a maximum height of four metres and a maximum width of three metres in the transport position. It is important that the relatively large crop-processing members 8 are optimally situated so that they remain within the prescribed dimensions in the operating position.

In the transport position, the processing members 8 are folded up in order to take up a position which is convenient for transportation. This transport position may result in the processing elements 9 projecting to one side of the haymaking machine 1 and thus causing a potential risk of injury to people or animals or of damage to objects.

In order to prevent this risk, or at least reduce it, a barrier device 10 is provided on each longitudinal side of the haymaking machine 1 which makes it possible to mark the processing members 8, in particular the processing elements 9, thereof in the transport position.

The barrier device 10 comprises a band 11, a winding device 12 and a fastening element 13. That end of the band 11 which is remote from the winding device 12 is provided with a hook element 14 which is hooked into an eyelet provided in the fastening element 13.

All winding devices 12 and associated fastening elements 13 are arranged on a side of the agricultural machine 1, and at a height h of 1.2 metres, in such a manner that the band 11, when it is attached to the fastening element 13 by the end 14, runs at the same height as the processing members 8 in the transport position, i.e. the height h of the tightened band 11 is situated between the lowest and the highest point of the respective processing member 8 in the transport position. The band 11 furthermore runs substantially parallel to the direction of travel of the agricultural machine 1. Alternatively, the band 11 could also run substantially parallel to the crop-processing members 8, i.e. in a horizontal direction at a substantially constant distance from the processing members 8.

Generally, the height h of the band 11, when the latter is tightened between the winding device 12 and the fastening element 13, is in the range from 1 to 2 metres, preferably in the range from 1.2 metres to 1.7 metres. Furthermore, the tightened band 11 is situated at least 10 cm, preferably at least 15 cm, from the processing members 8, in particular from the projecting ends of the processing elements 9 of the processing members 8.

The presence of the band 11, when it is attached to the fastening element 13, prevents the bearing arms 7 from being moved to the operating position. By unhooking the hook element 14 and winding the band 11 onto the winding device 12, the barrier can readily be removed so that folding out of the bearing arms 7 into the operating position becomes again possible. If, at another point in time, the bearing arms 7 are moved back to the transport position, the barrier device 10 can readily be put in place again by unwinding the band 11 from the winding device 12 and hooking the hook element 14 into the fastening element 13.

Advantageously, the winding device 12 comprises a tightening device for tightening the band 11. By means of such a tightening device, not only can the band 11 be tensioned automatically and the tension be maintained, but it is also possible to wind the band 11, if desired automatically, onto the winding device 12. Alternatively, it is possible, for example, to wind up the band 11 manually, for example onto two hooks which are arranged a short distance apart. In this case, it is possible to produce a band 11 of such length that it can be tightened exactly between the winding device 12 and the fastening element 13.

The band 11 can be made from any suitable material and preferably has a conspicuous colour, for example yellow/black or red/white stripes. The band can also have any suitable cross section. The band 11 may also comprise a strip, rope, cord, belt or chain or the like. It may be advantageous to make the band 11 at least partially from elastic material, so that it can more readily be tightened between the winding device 12 and the fastening element 13.

The winding device 12 is mounted on a first arm 15 which is situated on a front corner of each longitudinal side of the haymaking machine 1. The fastening device 13 is mounted on a second arm 16 which is arranged on a rear corner of each longitudinal side of the haymaking machine 1. The first arm 15 and second arm 16 thus mark the corners of the haymaking machine 1. The arms 15, 16 are advantageously also provided with conspicuous colours, for example the combination black/yellow or red/white, in order to make these corners of the haymaking machine 1 more noticeable. The bands 11 tightened between the two arms 15, 16 clearly mark the two longitudinal sides of the haymaking machine 1, with the processing members 8 being situated behind the band.

In the position illustrated in the figures, the second arms 16 prevent the bearing arms 7 from being folded out into the operating position. In order to make this folding out of the bearing arms 7 nevertheless possible, the second arms are mounted on the frame 2 so as to be foldable about a hinge 17. After the band 11 has been detached from the fastening element 13 and wound onto the winding device 12, the second arms 16 can thus be folded in in order to make it possible to move the processing members 8 to the operating position.

Figures 1 and 2 show an embodiment of the haymaking machine 1 in which a barrier device 10 is provided on both longitudinal sides of a haymaking machine 1. In an alternative embodiment, it is also possible to provide such a barrier device 10 on another side of an agricultural machine 1. In the embodiment of Figures 1 and 2, it is, for example, possible to provide a barrier device 10 between the two second arms 16, which marks the crop-processing members 8 on the rear of the haymaking machine 1. In this case, such a barrier device 10 also marks the rear of the haymaking machine 1.

## Claims

1. Agricultural machine (1) comprising:
- a frame (2) which is configured to be attached to a vehicle in order to move the agricultural machine (1) in a customary direction of travel,
- at least one bearing arm (7) which is connected to the frame (2) so as to be pivotable about one or more pivot axes, and
- a plurality of processing members (8) with processing elements (9) for working the land or processing a crop, wherein the processing members (8) are movably, in particular rotatably, connected to the bearing arm (7), wherein the processing members (8) are at least displaceable between an operating position and a transport position by pivoting the bearing arm (7), **characterized in that** the agricultural machine (1) comprises a barrier device (10) for demarcating the processing members (8) in the transport position, wherein the barrier device (10) comprises:
- a band (11),
- a winding device (12) for winding and unwinding the band, and
- a fastening element (13) which is provided at a distance from the winding device (12) for detachably fastening an end of the band (11) thereto,
wherein the winding device (12) and the fastening element (13) are arranged on one side of the agricultural machine (1) and at a height in the range from 1 to 2 metres, in such a manner that the band (11), when it is connected to the fastening element (13) with its end, runs at the same height as the processing members (8) in the transport position.

2. Agricultural machine (1) according to Claim 1, wherein the winding device (12) comprises a tightening device for tightening and/or automatically winding up the band (11).

3. Agricultural machine (1) according to Claim 1 or 2, wherein the end of the band (11) is provided with a hook element (14) which is capable of being detachably fastened to the fastening element (13).

4. Agricultural machine (1) according to one of the preceding claims, wherein the frame (2) comprises a first arm (15) to which the winding device (12) is attached and a second arm (16) to which the fastening element (13) is attached.

5. Agricultural machine (1) according to Claim 4, wherein the first arm (15) and/or the second arm (16) can be folded up.

6. Agricultural machine (1) according to Claim 4 or 5, wherein the first arm (15) and/or the second arm (16) are/is arranged on a corner of the agricultural machine (1) to serve as marking devices which mark a corner and/or side of the agricultural machine (1).

7. Agricultural machine (1) according to one of the preceding claims, wherein the winding device (12) and the fastening element (13) are arranged at a height in the range from 1.2 metres to 1.7 metres.

8. Agricultural machine (1) according to one of the preceding claims, wherein the winding device (12) and the fastening element (13) are arranged in such a manner that the band (11), when it is attached to the fastening element (13) by the end, is situated at least 10 cm, preferably at least 15 cm, from the processing members (8).

9. Agricultural machine (1) according to one of the preceding claims, wherein the band (11), when it is attached to the fastening element (13) by the end, runs substantially parallel to the direction of travel and/or at a substantially constant distance from the processing members (8) in the horizontal direction.

10. Agricultural machine (1) according to one of the preceding claims, wherein the agricultural machine (1) comprises a second barrier device (10) for demarcating the crop-processing members (8) in the transport position on an opposite side of the agricultural machine (1).

## Patentansprüche

1. Landwirtschaftliche Maschine (1), umfassend:
- einen Rahmen (2), welcher so konfiguriert ist, um an einem Fahrzeug angebracht zu werden, um die landwirtschaftliche Maschine (1) in eine übliche Fahrtrichtung zu bewegen,
- wenigstens einen Tragearm (7), welcher mit dem Rahmen (2) derart verbunden ist, um drehbar um eine oder mehrere Achsen zu sein, und
- eine Mehrzahl von Aufbereitungsbauteilen (8) mit Aufbereitungselementen (9) zum Bearbeiten des Bodens oder zum Aufbereiten eines Emteguts, wobei die Aufbereitungsbauteile (8) bewegbar, insbesondere drehbar, mit dem Tragearm (7) verbunden sind,
wobei die Aufbereitungsbauteile (8) wenigstens zwischen einer Arbeitsposition und einer Transportposition durch Drehen des Tragearms (7) verfahrbar sind, **dadurch gekennzeichnet, dass** die landwirtschaftliche Maschine (1) eine Sperrvorrichtung (10) zur Abgrenzung der Aufbereitungsbauteile (8) in der Transportposition umfasst, wobei die Sperrvorrichtung (10) umfasst:
- ein Band (11),
- eine Wickelvorrichtung (12) zum Auf- und Abwickeln des Bandes und
- ein Befestigungselement (13), welches mit einem Abstand von der Wickelvorrichtung (12) zum lösbaren Befestigen eines Endes des Bandes (11) an diesem vorgesehen ist,
wobei die Wickelvorrichtung (12) und das Befestigungselement (13) auf einer Seite der landwirtschaftlichen Maschine (1) und auf einer Höhe im Bereich von 1 bis 2 Metern auf solch eine Weise angeordnet sind, dass das Band (11), wenn es mit dem Befestigungselement (13) mit seinem Ende verbunden ist, auf der gleichen Höhe verläuft wie die Aufbereitungsbauteile (8) in der Transportposition.

2. Landwirtschaftliche Maschine (1) nach Anspruch 1,
wobei die Wickelvorrichtung (12) eine Spannvorrichtung zum Spannen und/oder automatischen Aufwickeln des Bandes (11) umfasst.

3. Landwirtschaftliche Maschine (1) nach Anspruch 1 oder 2,
wobei das Ende des Bandes (11) ein Hakenelement (14) aufweist, welches in der Lage ist, abnehmbar am Befestigungselement (13) befestigt zu werden.

4. Landwirtschaftliche Maschine (1) nach einem der vorhergehenden Ansprüche, wobei der Rahmen (2) einen ersten Arm (15), an welchem die Wickelvorrichtung (12) angebracht ist, und einen zweiten Arm (16), an welchem das Befestigungselement (13) angebracht ist, umfasst.

5. Landwirtschaftliche Maschine (1) nach Anspruch 4,
wobei der erste Arm (15) und/oder der zweite Arm (16) hochgeklappt werden kann.

6. Landwirtschaftliche Maschine (1) nach Anspruch 4 oder 5,
wobei der erste Arm (15) und/oder der zweite Arm (16) an einer Ecke der landwirtschaftlichen Maschine (1) angeordnet ist/sind, um als Markiervorrichtungen zu dienen, welche eine Ecke und/oder Seite der landwirtschaftlichen Maschine (1) kennzeichnen.

7. Landwirtschaftliche Maschine (1) nach einem der vorhergehenden Ansprüche, wobei die Wickelvorrichtung (12) und das Befestigungselement (13) auf einer Höhe im Bereich von 1,2 Metern bis 1,7 Metern angeordnet sind.

8. Landwirtschaftliche Maschine (1) nach einem der vorhergehenden Ansprüche, wobei die Wickelvorrichtung (12) und das Befestigungselement (13) auf solch eine Weise angeordnet sind, dass das Band (11), wenn es am Befestigungselement (13) mit dem Ende angebracht ist, wenigstens 10 cm, vorzugsweise wenigstens 15 cm, von den aufbereitenden Bauteilen (8) entfernt angeordnet ist.

9. Landwirtschaftliche Maschine (1) nach einem der vorhergehenden Ansprüche, wobei das Band (11), wenn es am Befestigungselement (13) mit dem Ende angebracht ist, im Wesentlichen parallel zur Fahrtrichtung und/oder mit im Wesentlichen konstantem Abstand von den aufbereitenden Bauteilen (8) in der horizontalen Richtung verläuft.

10. Landwirtschaftliche Maschine (1) nach einem der vorhergehenden Ansprüche, wobei die landwirtschaftliche Maschine (1) eine zweite Abgrenzungsvorrichtung (10) zum Abgrenzen der Ernte aufbereitenden Bauteile (8) in der Transportposition auf einer gegenüber liegenden Seite der landwirtschaftlichen Maschine (1) umfasst.

## Revendications

1. Machine agricole (1) comprenant:
- un châssis (2) qui est configuré pour être fixé à un véhicule afin de déplacer la machine agricole (1) dans une direction de déplacement habituelle,
- au moins un bras de support (7) qui est connecté au châssis (2) de manière à pouvoir être pivoté autour d'un ou plusieurs axes de pivotement, et
- une pluralité d'éléments de traitement (8) avec des éléments de traitement (9) pour travailler le sol ou traiter une culture, dans lequel les éléments de traitement (8) sont connectés de manière mobile, en particulier de manière rotative, au bras de support (7), dans laquelle les éléments de traitement (8) sont au moins déplaçables entre une position de fonctionnement et une position de transport en faisant pivoter le bras de support (7),
**caractérisée en ce que** la machine agricole (1) comprend un dispositif de barrière (10) pour délimiter les éléments de traitement (8) dans la position de transport, dans lequel le dispositif de barrière (10) comprend:
- une bande (11),
- un élément d'enroulement (12) pour enrouler et dérouler la bande, et
- un élément de fixation (13) qui est prédisposé à une distance du dispositif d'enroulement (12) pour la fixation amovible d'une extrémité de la bande (11) à celui-ci,
dans laquelle le dispositif d'enroulement (12) et l'élément de fixation (13) sont disposés sur un côté de la machine agricole (1) et à une hauteur dans la plage de 1 à 2 mètres, de sorte que la bande (11), quand elle est connectée à l'élément de fixation (13) par son extrémité, s'étende à la même hauteur que les éléments de traitement (8) dans la position de transport.

2. Machine agricole (1) selon la revendication 1, dans laquelle le dispositif d'enroulement (12) comprend un dispositif de serrage pour serrer et/ou enrouler automatiquement la bande (11).

3. Machine agricole (1) selon la revendication 1 ou 2, dans laquelle l'extrémité de la bande (11) est munie d'un élément de crochet (14) qui est apte à être fixé de manière amovible à l'élément de fixation (13).

4. Machine agricole (1) selon l'une des revendications précédentes, dans laquelle le châssis (2) comprend un premier bras (15) auquel est fixé le dispositif d'enroulement (12) et un deuxième bras (16) auquel est fixé l'élément de fixation (13).

5. Machine agricole (1) selon la revendication 4, dans laquelle le premier bras (15) et/ou le deuxième bras (16) peuvent être repliés.

6. Machine agricole (1) selon la revendication 4 ou 5, dans laquelle le premier bras (15) et/ou le deuxième bras (16) sont disposés/est disposé sur un coin de la machine agricole (1) pour servir de dispositifs de marquage qui marquent un coin et/ou un côté de la machine agricole (1).

7. Machine agricole (1) selon l'une des revendications précédentes, dans laquelle le dispositif d'enroulement (12) et le dispositif de fixation (13) sont disposés à une hauteur dans la plage de 1,2 mètre à 1,7 mètre.

8. Machine agricole (1) selon l'une des revendications précédentes, dans laquelle le dispositif d'enroulement (12) et le dispositif de fixation (13) sont disposés de sorte que la bande (11), quand elle est fixée au dispositif de fixation (13) par l'extrémité, soit située à au moins 10 cm, de préférence au moins 15 cm, des éléments de traitement (8).

9. Machine agricole (1) selon l'une des revendications précédentes, dans laquelle la bande (11), quand elle est fixée au dispositif de fixation (13) par l'extrémité, s'étend sensiblement parallèle à la direction de déplacement et/ou à une distance sensiblement constante des éléments de traitement (8) dans la direction horizontale.

10. Machine agricole (1) selon l'une des revendications précédentes, dans laquelle la machine agricole (1) comprend un deuxième dispositif de barrière (10) pour délimiter les éléments de traitement de culture (8) dans la position de transport sur un côté opposé de la machine agricole (1).
